# EUROPÄISCHE PATENTANMELDUNG

(11) **EP 4 755 667 A1**
(43) Veröffentlichungstag der Anmeldung: **10.06.2026**
(21) Anmeldenummer: 24217861.4
(22) Anmeldetag: 05.12.2024
(51) Int. Cl.: B60G 7/00, B62D 17/00, B60G 3/20

(54) **EINZELRADAUFHÄNGUNG**

(71) Anmelder: CP Tech GmbH, 33142 Büren (DE)
(72) Erfinder: BUNSE, Benedikt, 33142 Büren-Harth (DE); SAAKE, Nils, 33181 Bad Wünnenberg (DE)
(74) Vertreter: Patentanwälte Dörner & Kötter PartG mbB

(57) **Zusammenfassung**

Die Erfindung betrifft eine Einzelradaufhängung für ein Rad (2) eines Kraftfahrzeugs, umfassend einen Radträger (1) zur drehbaren Aufnahme eines Rades (2), der zwei Querlenkeraufnahmen (12, 14) für jeweils einen Querlenker (3, 5) und eine Spurstangenaufnahme (13) für eine Spurstange (4) aufweist, wobei Befestigungsmittel zur Befestigung der Querlenker (3, 5) und der Spurstange (4) angeordnet sind, dadurch gekennzeichnet, dass die Befestigungsmittel wenigstens einer Querlenkeraufnahme (12, 14) und/oder Spurstangenaufnahme (13) eine Exzenteranordnung (6) umfassen, wobei die Exzenteranordnung (6) wenigstens eine Stellscheibe (61) umfasst, die exzentrisch um eine Drehachse drehbar gelagert ist und die ein bogenförmiges Langloch (611) aufweist, durch die ein Stellbolzen (7) für einen Querlenker (3) oder eine Spurstange (4) geführt ist, wobei an der Stellscheibe (61) Ausnehmungen zum formschlüssigen Eingriff eines angeordneten Feststellelements (64) vorhanden sind.

## Beschreibung

Die Erfindung betrifft eine Einzelradaufhängung für ein Rad eines Kraftfahrzeugs nach dem Oberbegriff des Patentanspruchs 1.

Spur- und Sturzänderungen der Radaufhängung eines Kraftfahrzeuges haben einen beträchtlichen Einfluß auf die Querstabilität eines Kraftfahrzeugs. Der Sturz (bzw. Radsturz) gibt den Winkel zwischen der Radmittelebene und der Senkrechten zu Fahrbahn an. Er ist eine Kennzahl zur Bestimmung der optimalen Auflagefläche des Reifens auf der Fahrbahn. Ein positiver Radsturz bewirkt, dass das Rad bereits vor einer Kurve auf der Außenseite belastet wird. Die Zentrifugalkraft wirkt sich dadurch noch stärker auf das Fahrzeug aus, wodurch der Reifenverschleiß erhöht ist. Zudem kommt es zu einer Verringerung der Seitenführung der Reifen. Beim einem negativen Sturz ist der Reifen nach innen geneigt. Dabei hebt sich der äußere Rand des Reifens leicht ab und die Hauptbelastung liegt auf der Innenseite. Insbesondere im Rennsport wird ein negativer Sturz eingestellt, um eine bessere Kurvenlage zu erzielen.

Aus der DE 10 2022 115 373 A1 ist eine Einzelradaufhängung bekannt, bei denen der Radträger über mehrere Lenker mit dem Fahrzeugaufbau verbunden ist. Die Lenker sind dabei über Befestigungsmittel mit dem Radträger verbunden, welche zwei Exzenterschrauben umfassen, die jeweils mit zwei Exzenterscheiben drehfest verbunden sind, die mit einer mit Langlöchern versehenen Lagerkonsole zusammenwirken und mittels der eine Sturz- und eine Höhenverstellung ermöglicht ist. In der DE 10 2019 134 789 B4 Ist eine Radaufhängung beschrieben, bei der der Radträger über ein Bauteil mit dem Dämpferrohr eines Federbeins verbunden ist, wobei die Befestigung zur Sturzeinstellung mittels einer Exzenterschraube erfolgt.

Bei den vorbekannten Lösungen erweist sich die Einstellung des Sturzes als aufwendig. Zudem erfordern diese Lösungen relativ viel Bauraum. Hier setzt die vorliegende Erfindung an. Der Erfindung liegt die Aufgabe zu Grunde, eine Einzelradaufhängung für ein Rad eines Kraftfahrzeugs bereitzustellen, die kompakt ausgebildet ist und eine aufwandminimierte Verstellung des Radsturzes ermöglicht. Gemäß der Erfindung wird diese Aufgabe durch eine Einzelradaufhängung mit den Merkmalen des Patentanspruchs 1 gelöst.

Mit der Erfindung ist eine Einzelradaufhängung für ein Rad eines Kraftfahrzeugs bereitgestellt, die kompakt ausgebildet ist und eine aufwandminimierte Verstellung des Radsturzes ermöglicht. Dadurch dass die Exzenteranordnung wenigstens eine Stellscheibe umfasst, die exzentrisch um eine Drehachse drehbar gelagert ist und die ein bogenförmiges Langloch aufweist, durch die ein Stellbolzen für einen Querlenker oder eine Spurstange geführt ist, wobei an der Stellscheibe Ausnehmungen zum formschlüssigen Eingriff eines angeordneten Feststellelements vorhanden sind, ist eine einfache Verstellung des Radsturzes durch Drehung der Stellscheibe um die Achse ermöglicht. Durch Drehung der Stellscheibe um die Achse ist eine lineare Verschiebung des Stellbolzen und der mit diesem verbundenen Spurstange bzw. des mit diesem verbundenen Querlenkers erzielt, wodurch eine Sturzverstellung bewirkt ist.

In Weiterbildung der Erfindung weist die Stellscheibe einen Werkzeugeingriff zu deren Drehung mittels eines formschlüssig mit diesem verbindbaren Werkzeugs auf. Hierdurch ist die Drehung der Stellscheibe mittels eines Werkzeugs erleichtert. Der Werkzeugeingriff kann beispielsweise in Form eines Außenvielkants oder eines Innenvielkants ausgebildet sein.

In Ausgestaltung der Erfindung ist parallel zu der Stellscheibe beabstandet zu dieser eine Führungsscheibe angeordnet, die ein bogenförmiges Langloch aufweist, das mit dem Langloch der Stellscheibe fluchtet und durch das der Stellbolzen geführt ist, wobei die Führungsscheibe über eine Synchronisationsstrebe mit der Stellscheibe drehfest verbunden ist, welche die Drehachse bildet. Hierdurch ist eine stabile Führung des Stellbolzen erzielt. Die Synchronisationsstrebe ist vorteilhaft in Form eines Bolzens ausgebildet. Bevorzugt weist die Synchronisationsstrebe einen Werkzeugeingriff auf.

Alternativ kann auch die Führungsscheibe die Ausnehmungen zum formschlüssigen Eingriff eines angeordneten Feststellelements aufweisen, da diese über die Synchronisationsstrebe fest mit der Stellscheibe verbunden ist. In diesem Fall ist der nachfolgend beschriebene Anordnung des Feststellelements in Wechselwirkung mit Ausnehmungen der Stellscheibe auf die Führungsscheibe zu übertragen.

In weiterer Ausgestaltung der Erfindung sind die Ausnehmungen in Art eines Rasters angeordnet, wobei die Ausnehmungen in die Stellscheibe oder randseitig an der Stellscheibe angeordnet sind. Hierdurch ist eine Fixierung der Stellscheibe durch das Feststellelement in unterschiedlichen Drehpositionen ermöglicht.

In Weiterbildung der Erfindung ist das Feststellelement federnd an dem Radträger gelagert und in Richtung der Stellscheibe vorgespannt, wobei das Feststellelement derart ausgebildet ist, dass es bei einer Drehung der Stellscheibe selbsttätig aus einer Ausnehmung heraus in eine benachbarte Ausnehmung hinein wechselt. Hierdurch ist eine selbsttätige Fixierung der Stellscheibe in einer eingestellten Drehposition bewirkt.

In Ausgestaltung der Erfindung sind die Ausnehmungen derart randseitig in die Stellscheibe eingebracht, dass eine Außenverzahnung gebildet ist, wobei das Feststellelement ein Rastelement aufweist, das in eine Vertiefung der Außenverzahnung eingreift, gegen die es vorgespannt ist. Hierdurch ist eine fortlaufende Fixierung der Stellscheibe während einer Verdrehung bewirkt.

In einer alternativen Ausgestaltung der Erfindung sind die Ausnehmungen in Art einer Reihe von Einsenkungen oder Löchern in die Stellscheibe eingebracht, wobei das Feststellelement wenigstens einen axial federnd gelagerten Stift aufweist, der in Einsenkungen oder Löcher eingreift. Hierdurch ist ebenfalls eine fortlaufende Fixierung der Stellscheibe während einer Verdrehung bewirkt. Bevorzugt ist der wenigstens eine Stift an seinem den Einsenkungen oder Löchern zugewandten Ende kugelabschnittsförmig ausgebildet. Hierdurch ist ein erleichtertes Hinein- und Hinausgleitend des wenigstens einen federnd gelagerten Stiftes in bzw. aus einer Einsenkung oder einem Loch erzielt. Alternativ kann der wenigstens eine Stift an diesem Ende auch mit einer rotierbar gelagerten Kugel versehen sein.

In Weiterbildung der Erfindung ist ein Sperrelement angeordnet, über das eine Bewegung des Feststellelements blockierbar ist. Hierdurch ist eine Festlegung des Feststellelements in seiner Eingriffsstellung in einer gewünschten Drehposition ermöglicht, wodurch eine unbeabsichtigte Drehung der Stellscheibe verhindert ist.

In Ausgestaltung der Erfindung weist der Radträger an zwei gegenüberliegenden Seiten wenigstens einer der Querlenkeraufnahmen und/oder der Spurstangenaufnahme jeweils eine Gleitfläche auf, wobei an einer ersten der beiden Gleitflächen die Stellscheibe und an der zweiten Gleitfläche die Führungsscheibe anliegt. Hierdurch ist eine stabil geführte Bewegung von Stellscheibe und Führungsscheibe und damit eine definierte Bewegung des durch deren Langlöcher geführten Stellbolzens gewährleistet.

In weiterer Ausgestaltung der Erfindung weist der Radträger wenigstens eine Gleitbuchse auf, in welcher der Stellbolzen vorzugsweise linear verschiebbar geführt ist. Hierdurch ist eine definierte Bewegung des Stellbolzens weiter unterstützt.

In Weiterbildung der Erfindung umfassen die Befestigungsmittel der Spurstangenaufnahme sowie einer ersten der beiden Querlenkeraufnahmen eine Exzenteranordnung, wobei die Befestigungsmittel der zweiten Querlenkeraufnahme durch einen fest in der zweiten Querlenkeraufnahme angeordneten Haltebolzen gebildet sind. Hierdurch ist eine Einstellung des Sturzes über eine definierte Verschiebung der Spurstange und des von der ersten Querlenkeraufnahme aufgenommenen Querlenkers über den in der jeweiligen Exzenteranordnung geführten Stellbolzen ermöglicht.

In Ausgestaltung der Erfindung umfasst die Exzenteranordnung Mittel zur Anzeige der Drehposition der Stellscheibe. Hierdurch ist eine definierte Einstellung des Radsturzes unterstützt.

In weiterer Ausgestaltung der Erfindung umfassen die Mittel zur Anzeige der Drehposition der Stellscheibe eine auf der Stellscheibe angeordnete Skala, wobei eine die Stellscheibe zumindest bereichsweise überdeckende Deckscheibe angeordnet ist, die ein Fenster aufweist, durch die ein definierter Bereich der Skala sichtbar ist. Hierdurch ist eine eingestellte Drehposition der Stellscheibe durch den jeweiligen durch das Fenster ersichtlichen Skalenwert unmittelbar ablesbar. Alternativ kann an der Deckscheibe auch eine Ausnehmung mit einer Markierung angeordnet sein, an der ein Bereich der Skala sichtbar ist.

Andere Weiterbildungen und Ausgestaltungen der Erfindung sind in den übrigen Unteransprüchen angegeben. Ein Ausführungsbeispiel der Erfindung ist in den Zeichnungen dargestellt und wird nachfolgend im Einzelnen beschrieben. Es zeigen:
- Figur 1:: die schematische Darstellung einer Einzelradaufhängung:

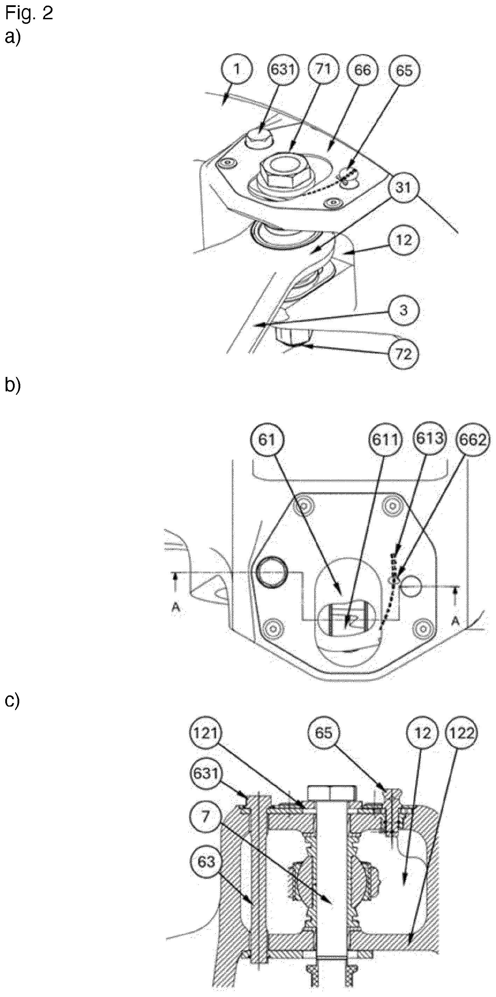

- Figur 2:: die schematische Darstellung der oberen Querlenkeraufnahme der Einzelradaufhängung aus Figur 1
a) in räumlicher Ansicht;
b) in der Draufsicht;
c) im Längsschnitt A-A;

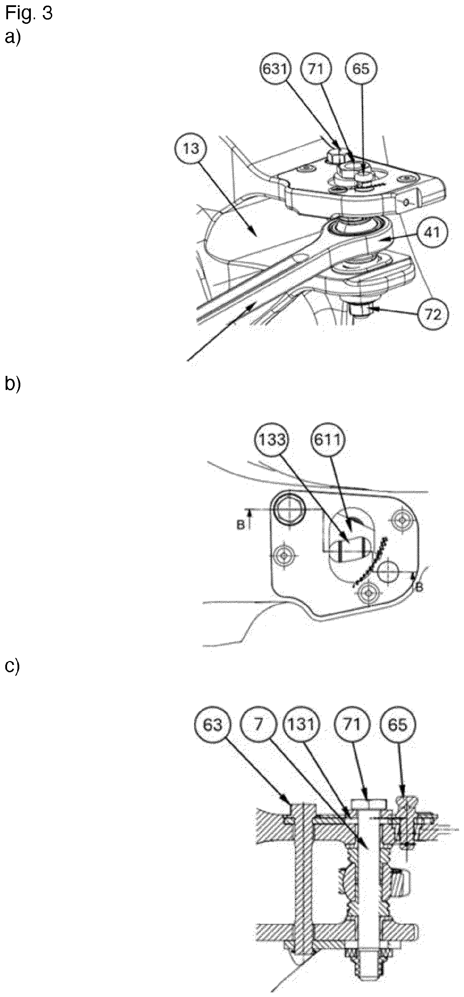

- Figur 3:: die schematische Darstellung der Spurstangenaufnahme der Einzelradaufhängung aus Figur 1
a) in räumlicher Ansicht;
b) in der Draufsicht;
c) im Längsschnitt B-B;

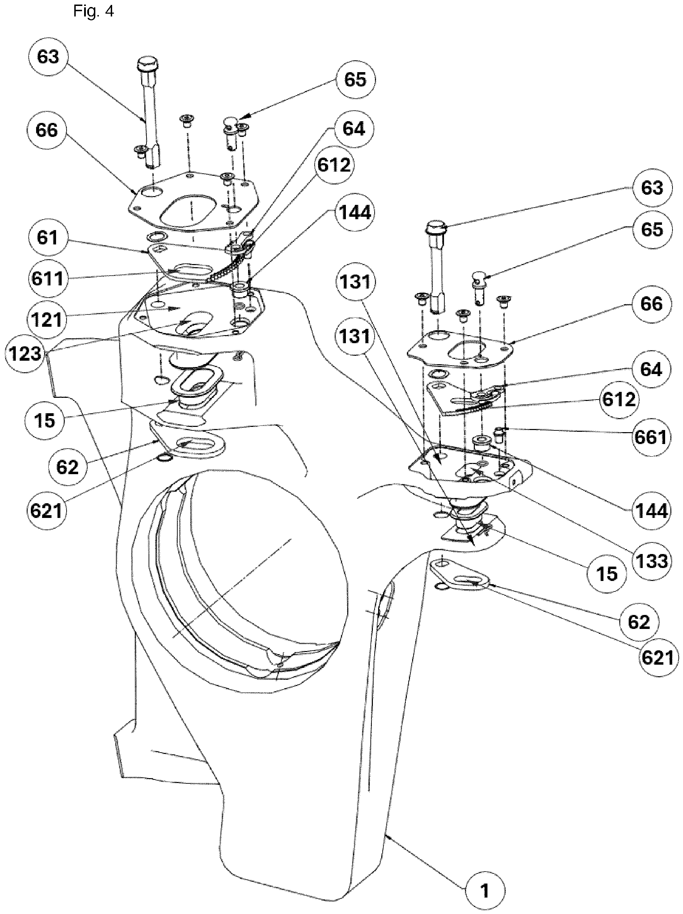

- Figur 4:: den Radträger der Einzelradaufhängung aus Figur 1 mit Exzenteranordnung der oberen Querlenkeraufnahme und der Spurstangenaufnahme in Explosionsdarstellung;

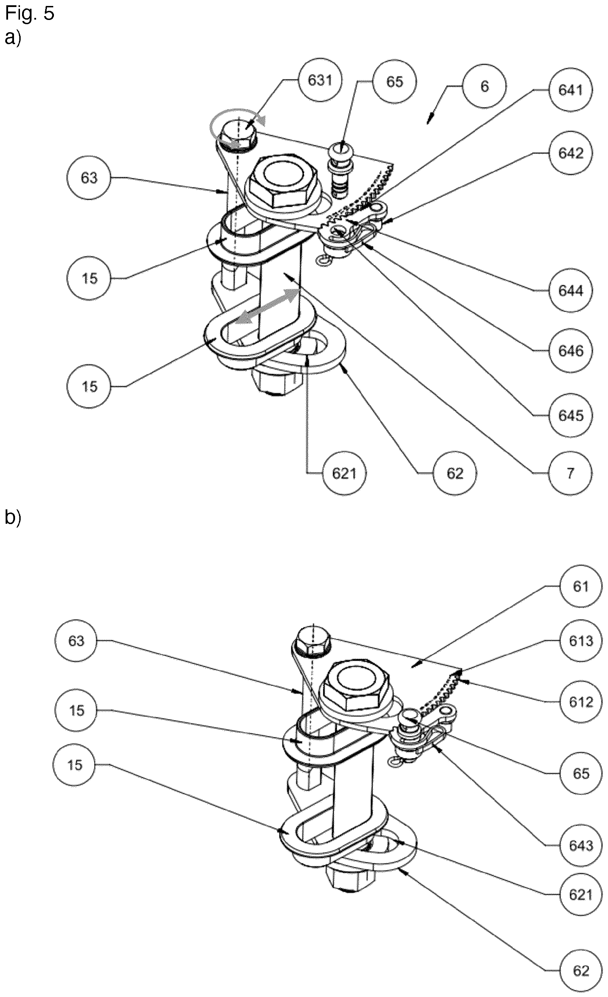

- Figur 5:: die schematische Darstellung der Exzenteranordnung der oberen Querlenkeraufnahme und und der Spurstangenaufnahme aus Figur 4
a) in verstellbarer Stellung (mit bewegbarem Feststellelement)
b) in fixierter Stellung (mit festgelegtem Feststellelement);

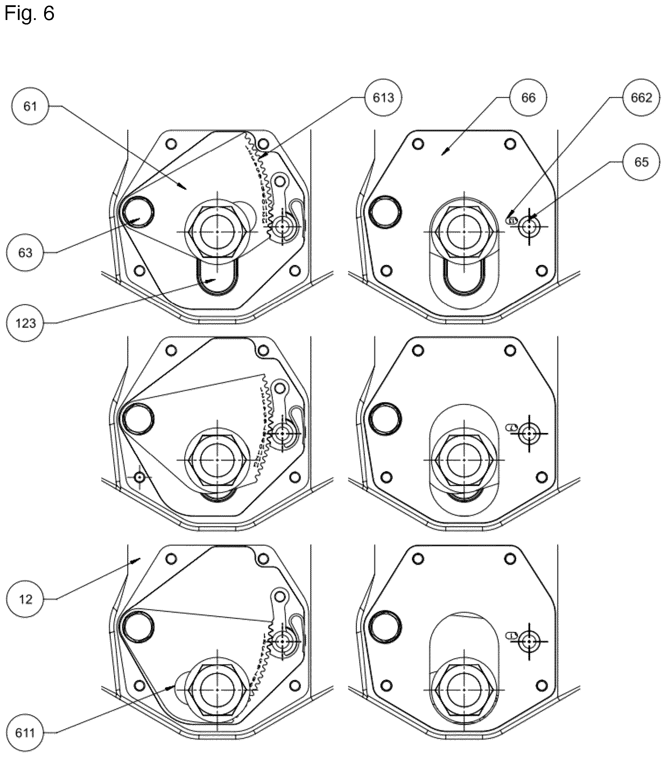

- Figur 6:: schematische Darstellungen der oberen Querlenkeraufnahme mit drei verschiedenen Drehpositionen der Stellscheibe aus Figur 2 in der Draufsicht (links ohne Deckscheibe, rechts mit Deckscheibe).

Die als Ausführungsbeispiel gewählte Einzelradaufhängung umfasst einen Radträger 1, an dem ein Rad 2 befestigt ist und der mit zwei gegenüberliegend angeordneten Querlenkern 3, 5 sowie einer Spurstange 4 verbunden ist.

Der Radträger 1 weist mittig eine mit einer Lagerbuchse versehene Achsdurchführung 11 auf. Oberhalb der Achsdurchführung 11 ist beabstandet zu dieser eine in der dem Rad 2 entgegengesetzten Richtung hervorstehende erste Querlenkeraufnahme 12 mit einem im Wesentlichen rechteckigen Hohlquerschnitt angeordnet, die auf ihrer der Achsdurchführung abgewandten Oberseite eine erste Gleitfläche 121 und auf ihrer gegenüberliegenden Unterseite eine zweite Gleitfläche 122 aufweist. Seitlich beabstandet zu der ersten Querlenkeraufnahme 12 ist vertikal versetzt eine Spurstangenaufnahme 13 vorhanden mit einem ebenfalls im Wesentlichen rechteckigen Hohlquerschnitt angeordnet. Auch die Spurstangenaufnahme 13 weist auf ihrer der ersten Querlenkeraufnahme 12 zugewandten Oberseite eine erste Gleitfläche 131 sowie der dieser gegenüberliegenden Unterseite eine zweite Gleitfläche 132 auf. Der ersten Querlenkeraufnahme 12 gegenüberliegend ist unterhalb der Achsdurchführung 11 eine zweite Querlenkeraufnahme 14 vorhanden, die ebenfalls einen im Wesentlichen rechteckigen Hohlquerschnitt aufweist.

Die erste Querlenkeraufnahme 12 und die Spurstangenaufnahme 13 sind jeweils mit einer Exzenteranordnung 6 versehen, die eine Stellscheibe 61 und eine parallel beabstandet zu dieser angeordnete Führungsscheibe 62 umfasst, die über eine exzentrisch angeordnete Synchronisationsstrebe 63 fest miteinander verbunden sind. Auf der Oberseite der Stellscheibe 61 weist die Synchronisationsstrebe 63 einen Sechskantkopf 631 zum Eingriff eines Schraubenschlüssels auf.

Die Stellscheibe 61 ist mit einem bogenförmigen Langloch 611 versehen, das mit einem in die Führungsscheibe 62 eingebrachten bogenförmigen Langloch 621 fluchtet. Außen ist in die Stellscheibe 61 randseitig eine Verzahnung 612 eingebracht. Beabstandet zu der Verzahnung 612 befindet sich auf der Stellscheibe 61 eine Skala 613, die im Ausführungsbeispiel durch aufsteigende Zahlen gebildet ist, wobei jeweils eine Zahl einem Tal der Verzahnung 612 zugeordnet ist.

Auf den ersten Gleitflächen 121, 132 der ersten Querlenkeraufnahme 12 und der Spurstangenaufnahme 13 liegt jeweils eine Stellscheibe 61 und auf den zweiten Gleitflächen 122, 132 der ersten Querlenkeraufnahme 12 und der Spurstangenaufnahme 13 liegt jeweils eine Führungsscheibe 62 einer Exzenteranordnung 6 auf, wobei die jeweilige Synchronisationsstrebe 63 durch die Querlenkeraufnahme 12 bzw. die Spurstangenaufnahme 13 geführt ist, in der sie drehbar, jedoch axial fixiert gelagert ist. Die erste Querlenkeraufnahme 12 und die der Spurstangenaufnahme 13 sind jeweils die ersten und zweiten Gleitflächen 121, 122, 131, 132 durchdringend mit einem quer zu den bogenförmigen Langlöchern 611, 621 der Stellscheibe 61 und der Führungsscheibe 62 verlaufenden geraden Langloch 123, 133 versehen, in das eine dem Langloch 123, 133 entsprechend längliche Gleitbuchse 15 eingebracht ist.

An die erste Gleitfläche 121, 131 angrenzend ist auf der der ersten Querlenkeraufnahme 12 und der Spurstangenaufnahme 13 jeweils ein Feststellelement 64 angeordnet. Das Feststellelement 64 umfasst einen Schwenkarm 641, der um eine Achse 642 schwenkbar mit der ersten Querlenkeraufnahme 12 bzw. der Spurstangenaufnahme 13 verbunden ist. Endseitig weist der Schwenkarm 641 einen Rastkopf 643 mit einem Rastelement 644 zum Eingriff in die Verzahnung 612 der Stellscheibe 61 auf. Im Ausführungsbeispiel weit das Rastelement 644 mehrere Rastzähne zum Eingriff in die Verzahnung 612 der Stellscheibe 61 auf. Mittig ist der Rastkopf 643 mit einer Bohrung 645 zur Durchführung eines Sicherungsstiftes 65 versehen, der in eine hierzu in der ersten Querlenkeraufnahme 12 bzw. der Spurstangenaufnahme 13 angeordnete Rasthülse 124, 134 einsteckbar ist. Der Schwenkarm 641 ist über eine Feder 646 gegen die Stellscheibe 61 vorgespannt. Im Ausführungsbeispiel ist die Feder 646 einstückig an das Feststellelement 64 angeformt.

Durch die Langlöcher 611, 621 der Stellscheibe 61 und der Führungsscheibe 62 ist durch die Gleitbuchsen 15 der ersten Querlenkeraufnahme 12 ein Stellbolzen 7 geführt, der durch eine an dem von der ersten Querlenkeraufnahme 12 aufgenommenen ersten Querlenker 3 endseitig angeordnete Öse 31 geführt ist. Der Stellbolzen 7 weist endseitig einen Kopf 71 auf, mit dem er auf der Stellscheibe 61 aufliegt. An seinem dem Kopf 71 gegenüberliegenden Ende ist der Stellbolzen 7 über eine Mutter 72 axial gesichert.

Entsprechend ist durch die Langlöcher 611, 621 der Stellscheibe 61 und der Führungsscheibe 62 durch die Gleitbuchsen 15 der Spurstangenaufnahme 13 ein Stellbolzen 7 geführt, der durch eine an der von der Spurstangenaufnahme 13 aufgenommenen Spurstange 4 endseitig angeordnete Öse 41 geführt ist und der mit seinem Kopf 71 auf der Stellscheibe 61 aufliegt und über eine endseitig aufgeschraubte Mutter 72 axial gesichert ist.

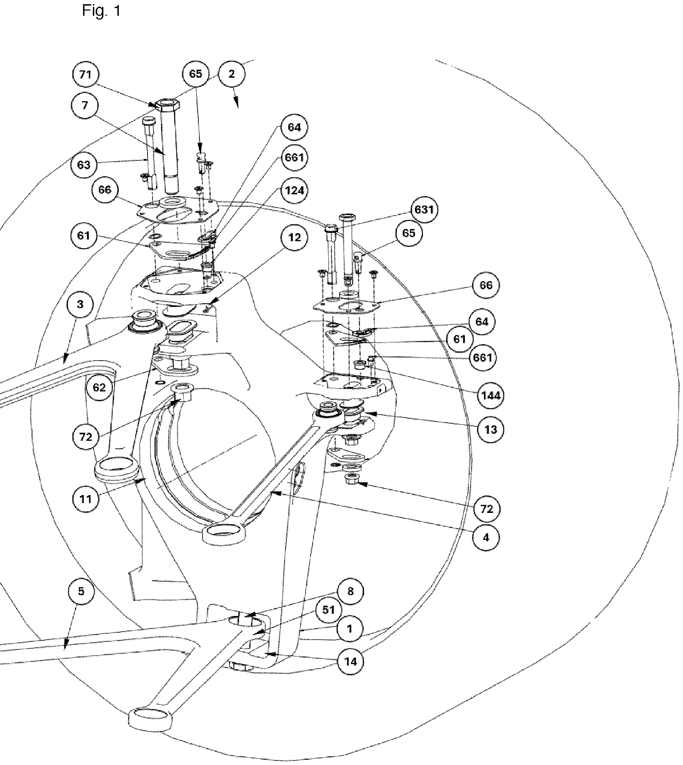

Die Stellscheibe 61 jeweils überdeckend ist mittels Abstandhaltern 661 beabstandet zu dieser eine Deckscheibe 66 auf der der ersten Querlenkeraufnahme 12 und der Spurstangenaufnahme 13 befestigt. Die Deckscheibe 66 ist im Bereich der Skala 613 der Stellscheibe 61 mit einem Fenster 662 versehen. Das Fenster 662 ist derart dimensioniert, dass es etwas größer ist, als eine Ziffer der Skala 613, wodurch in jeder Drehposition der Stellscheibe 61 die unter dem Fenster 662 befindliche Zahl der Skala 613 gut zu erkennen ist (vgl. Figur 1). Im Ausführungsbeispiel ist er Abstand der Zahlen der Skala 613 derart gewählt, dass ein Wechsel der unter dem Fenster 662 erscheinenden Zahl jeweils bei einer Drehung um 0,5 Grad erfolgt.

In die zweite Querlenkeraufnahme 14 ist ein Haltebolzen 8 fest eingebracht, der durch eine an dem von der zweiten Querlenkeraufnahme 14 aufgenommenen zweiten Querlenker 5 endseitig angeordnete Öse 51 geführt ist. Der Haltebolzen 8 ist im Ausführungsbeispiel durch eine Schraube gebildet, welche die zweite Querlenkeraufnahme 14 durchdringend in den Radträger 1 eingeschraubt ist. Der zweite Querlenker 5 ist so ortsfest mit dem Radträger 1 verbunden.

Zur Einstellung des Sturzes des Rades 2 wird die Synchronisationsstrebe 63 der Exzenteranordnung der ersten Querlenkeraufnahme 12 und/oder der Spurstangenaufnahme 12 mittels eines Schraubenschlüssels deren Sechskantkopf 63 umfassend gedreht, wodurch die mit der Synchronisationsstrebe 63 fest verbundene Stell- und Führungsscheiben 61, 62 gedreht werden. Durch die Drehung der Stell- und Führungsscheiben 61, 62 wird der durch deren bogenförmigen Langlöchern 611, 621 geführte Stellbolzen 7 linear innerhalb der Gleitbuchsen 15 der ersten Querlenkeraufnahme 12 bzw. der Spurstangenaufnahme 12 bewegt, wodurch der den Stellbolzen 7 umfassende Querlenker bzw. die den Stellbolzen umfassende Spurstange verschoben wird.

Während der Drehung der Stellscheibe 61 gleitet der durch die Feder 646 gegen die Stellscheibe 61 vorgespannte Rastkopf 643 des Feststellelements 64 entlang der randseitigen Verzahnung 612 der Stellscheibe 61, wobei die Rastzähne des Rastelements 644 des Rastkopfes 643 entlang der Verzahnung 612 von Tal zu Tal wechseln. Gleichzeitig bewegt sich die Skala 613 der Stellscheibe 61 unter der ortsfesten Deckscheibe 66, wobei die einzelnen Zahlen der Skala 613 durch das Fenster 662 zu erkennen sind. Durch das Fenster 662 ist so die tatsächlich erfolgte Drehung der Stellscheibe 61 anhand der erkennbaren Zahl der Skala 613 ablesbar.

Ist die gewünschte Drehung der Stell- und Führungsscheiben 61, 62 erfolgt, wird der Sicherungsstift 65 durch die Bohrung 645 des Feststellelements 64 hindurch in die Rasthülse 124, 144 der ersten Querlenkeraufnahme 12 bzw. der Spurstangenaufnahme 13 eingesteckt. Hierdurch ist der Rastkopf 643 in seiner Lage fixiert, wodurch die Stellscheibe 61 durch die in die Verzahnung 612 eingreifenden Rastzähne des Rastelements 644 des Rastkopfes 643 drehfest blockiert ist.

## Patentansprüche

1. Einzelradaufhängung für ein Rad (2) eines Kraftfahrzeugs, umfassend einen Radträger (1) zur drehbaren Aufnahme eines Rades (2), der zwei Querlenkeraufnahmen (12, 14) für jeweils einen Querlenker (3, 5) und eine Spurstangenaufnahme (13) für eine Spurstange (4) aufweist, wobei Befestigungsmittel zur Befestigung der Querlenker (3, 5) und der Spurstange (4) angeordnet sind, **dadurch gekennzeichnet, dass** die Befestigungsmittel wenigstens einer Querlenkeraufnahme (12, 14) und/oder Spurstangenaufnahme (13) eine Exzenteranordnung (6) umfassen, **dadurch gekennzeichnet, dass** die Exzenteranordnung (6) wenigstens eine Stellscheibe (61) umfasst, die exzentrisch um eine Drehachse drehbar gelagert ist und die ein bogenförmiges Langloch (611) aufweist, durch die ein Stellbolzen (7) für einen Querlenker (3) oder eine Spurstange (4) geführt ist, wobei an der Stellscheibe (61) Ausnehmungen zum formschlüssigen Eingriff eines angeordneten Feststellelements (64) vorhanden sind.

2. Einzelradaufhängung nach Anspruch 1, **dadurch gekennzeichnet, dass** die Stellscheibe (61) einen Werkzeugeingriff zu deren Drehung mittels eines formschlüssig mit diesem verbindbaren Werkzeugs aufweist.

3. Einzelradaufhängung nach Anspruch 1 oder 2, **dadurch gekennzeichnet, dass** parallel zu der Stellscheibe (61) beabstandet zu dieser eine Führungsscheibe (62) angeordnet ist, die ein bogenförmiges Langloch (621) aufweist, das mit dem Langloch (611) der Stellscheibe (61) fluchtet und durch das der Stellbolzen (7) geführt ist, wobei die Führungsscheibe (62) über eine Synchronisationsstrebe (63), welche die Drehachse bildet, mit der Stellscheibe (61) drehfest verbunden ist, die bevorzugt den Werkzeugeingriff aufweist.

4. Einzelradaufhängung nach einem der vorgenannten Ansprüche, **dadurch gekennzeichnet, dass** die Ausnehmungen in Art eines Rasters angeordnet sind, wobei die Ausnehmungen in die Stellscheibe (61) oder randseitig an der Stellscheibe (61) angeordnet sind.

5. Einzelradaufhängung nach einem der vorgenannten Ansprüche, **dadurch gekennzeichnet, dass** das Feststellelement (64) federnd an dem Radträger (1) gelagert und in Richtung der Stellscheibe (61) vorgespannt ist, wobei das Feststellelement (64) derart ausgebildet ist, dass es bei einer Drehung der Stellscheibe (61) selbsttätig aus einer Ausnehmung heraus in eine benachbarte Ausnehmung hinein wechselt.

6. Einzelradaufhängung nach Anspruch 5, **dadurch gekennzeichnet, dass** die Ausnehmungen derart randseitig in die Stellscheibe (61) eingebracht sind, dass eine Verzahnung (612) gebildet ist, wobei das Feststellelement (64) eine Rastelement (644) aufweist, das in wenigstens eine Vertiefung der Verzahnung (612) eingreift, gegen die es vorgespannt ist.

7. Einzelradaufhängung nach Anspruch 5, **dadurch gekennzeichnet, dass** die Ausnehmungen in Art eine Einsenkungs- oder Lochreihe in die Stellscheibe (61) eingebracht sind, wobei das Feststellelement wenigstens einen axial federnd gelagerten Stift aufweist, der in ein Loch der Einsenkungs- oder Lochreihe eingreift.

8. Einzelradaufhängung nach einem der Ansprüche 5 bis 7, **dadurch gekennzeichnet, dass** ein Sperrelement angeordnet ist, über das eine Bewegung des Feststellelements (64) blockierbar ist.

9. Einzelradaufhängung nach einem der Ansprüche 3 bis 8, **dadurch gekennzeichnet, dass** der Radträger (1) an zwei gegenüberliegenden Seiten wenigstens einer der Querlenkeraufnahmen (12, 14) und/oder der Spurstangenaufnahme (13) jeweils eine Gleitfläche (121, 122, 131, 132) aufweist, wobei an einer ersten (121, 131) der beiden Gleitflächen die Stellscheibe (61) und an der zweiten Gleitfläche (122, 132) die Führungsscheibe (62) anliegt.

10. Einzelradaufhängung nach einem der vorgenannten Ansprüche, **dadurch gekennzeichnet, dass** der Radträger (1) wenigstens eine Gleitbuchse (15) aufweist, in welcher der Stellbolzen (7) vorzugsweise linear verschiebbar geführt ist.

11. Einzelradaufhängung nach einem der vorgenannten Ansprüche, **dadurch gekennzeichnet, dass** die Befestigungsmittel der Spurstangenaufnahme (13) sowie einer ersten (12) der beiden Querlenkeraufnahmen eine Exzenteranordnung (6) umfassen, wobei die Befestigungsmittel der zweiten Querlenkeraufnahme (14) durch einen fest in dieser angeordneten Haltebolzen (8) gebildet sind.

12. Einzelradaufhängung nach einem der vorgenannten Ansprüche, **dadurch gekennzeichnet, dass** die Exzenteranordnung (6) Mittel zur Anzeige der Drehposition der Stellscheibe (61) umfasst.

13. Einzelradaufhängung nach Anspruch 12, **dadurch gekennzeichnet, dass** die Mittel zur Anzeige der Drehposition der Stellscheibe (61) eine auf der Stellscheibe (61) angeordnete Skala (613) umfassen, wobei eine die Stellscheibe (61) zumindest bereichsweise überdeckende Deckscheibe (66) angeordnet ist, die ein Fenster aufweist (662), durch die ein definierter Bereich der Skala (613) sichtbar ist.
